# EUROPÄISCHE PATENTSCHRIFT

(11) **EP 3 658 810 B1**
(45) Veröffentlichungstag und Bekanntmachung des Hinweises auf die Patenterteilung: **25.08.2021**
(21) Anmeldenummer: 18765796.0
(22) Anmeldetag: 20.07.2018
(51) Int. Cl.: F16L 1/12, B65D 59/00, F16L 23/00, F16L 55/115

(54) **SCHWIMMFÄHIGE ROHRZUSAMMENSTELLUNG**
FLOATABLE PIPE COMBINATION
ENSEMBLE DE TUBES FLOTTANT

(30) Priorität: 27.07.2017 DE 102017117045
(43) Veröffentlichungstag der Anmeldung: 03.06.2020
(73) Patentinhaber: agru Kunststofftechnik Gesellschaft m.b.H., 4540 Bad Hall (AT)
(72) Erfinder: LUEGHAMER, Albert, 4522 Sierning (AT); PRANGL, Wolfgang, 4400 Steyr (AT)
(74) Vertreter: Burger, Hannes
(86) Internationale Anmeldenummer: PCT/AT2018/060156
(87) Internationale Veröffentlichungsnummer: WO 2019/018869

(56) Entgegenhaltungen:
- WO-A1-2016/153840
- NL-A- 7 908 058
- US-A- 1 934 681
- US-A- 3 204 658
- US-A- 6 135 156

## Beschreibung

Die Erfindung betrifft eine schwimmfähige Rohrzusammenstellung.

Bei verschiedensten Anwendungsgebieten werden Kunststoffrohre mit einem großen Durchmesser benötigt, die in einem Gewässer installiert werden. Hierbei werden die Kunststoffrohre direkt nach dem Extrudieren in das Wasser geführt. Somit ist es möglich Kunststoffrohre mit einer Länge von mehr als 5m, insbesondere mit einer Länge von bis zu 1.000m in einem Strang zu produzieren. Die Kunststoffrohre werden nach der Produktion an deren Längsende mit Verschlussdeckeln versehen und werden dadurch zu schwimmfähigen Rohrzusammenstellungen. Mehrere von derartigen Rohrzusammenstellungen können mittels Seilen an ein Schiff gekoppelt werden und mittels dem Schiff auf dem Wasser über große Distanzen gezogen werden. Eine schwimmfähige Rohrzusammenstellung wird beispielsweise in Dokument WO2016153840 beschrieben.

Die einzelnen Rohrzusammenstellungen können hierbei während dem Ziehen mittels dem Schiff aneinanderstoßen und sich gegenseitig beschädigen. Insbesondere an Flanschbereichen an Längsenden der Rohrzusammenstellungen sind derartige Beschädigungen unerwünscht, da dies die Dichtheit von mehreren aneinandergeschlossenen Kunststoffrohren negativ beeinflussen kann.

Aufgabe der vorliegenden Erfindung war es, die Nachteile des Standes der Technik zu überwinden und eine schwimmfähige Rohrzusammenstellung und ein Verfahren zum Herstellen einer derartigen Rohrzusammenstellung zur Verfügung zu stellen, mittels derer die Kunststoffrohre beim Transport vor Beschädigung geschützt werden.

Diese Aufgabe wird durch eine Vorrichtung und ein Verfahren gemäß den Ansprüchen gelöst. Erfindungsgemäß ist eine schwimmfähige Rohrzusammenstellung vorgesehen, die folgende Bauteile umfasst:
- ein Kunststoffrohr mit einem hinteren Längsende, an welchem ein hinterer Flanschbereich ausgebildet ist und einem vorderen Längsende, an welchem ein vorderer Flanschbereich ausgebildet ist;
- einen am hinteren Längsende angeordneten Verschlussdeckel;
- einen am vorderen Längsende angeordneten Verschlussdeckel, welcher eine Zugvorrichtung aufweist.

Zumindest am vorderen Längsende ist ein Flanschschutz mit einem äußeren Schutzmantel angeordnet ist, wobei der äußere Schutzmantel gegenüber dem Außendurchmesser des Kunststoffrohres radial vorstehend ausgebildet ist

Die erfindungsgemäße schwimmfähige Rohrzusammenstellung weist den Vorteil auf, dass durch den Flanschschutz die Flanschbereiche des Kunststoffrohres beim Transport im Gewässer vor Beschädigung geschützt werden. Somit ist es möglich, mehrere der Kunststoffrohre bzw. der schwimmfähigen Rohrzusammenstellungen nebeneinander anzuordnen und mittels einem Schiff in einem Gewässer zu ziehen. Durch den Schutz der Flanschbereiche kann erreicht werden, dass etwaige Beschädigungen und somit notwendige Reparaturen beim Verbinden von einzelnen Rohren hintangehalten werden.

Erfindungsgemäß weist der vordere Flanschbereich und/oder der hintere Flanschbereich einen Losflansch auf welcher an einem Vorschweißbund abgestützt ist, und der äußere Schutzmantel des Flanschschutzes mit dem Losflansch verschraubt ist. Von Vorteil ist hierbei, dass durch diese Maßnahme der äußere Schutzmantel des Flanschschutzes mit dem zu schützenden Flanschbereich fest verbunden ist und somit einwirkende Energie mittels dem äußerem Schutzmantel gedämpft bzw. abgefangen werden kann.

Ferner kann vorgesehen sein, dass der äußere Schutzmantel in seiner Grundform als Rotationskörper, insbesondere als Torus, ausgebildet ist, welcher in dessen dem Rotationszentrum zugewandter Seite offen ist und den Flanschbereich aufnimmt. Von Vorteil ist hierbei, dass durch diese Maßnahme der äußere Schutzmantel den Flanschbereich hüllenförmig umgeben kann und somit gut vor äußeren Einwirkungen schützen kann.

Darüber hinaus kann vorgesehen sein, dass der äußere Schutzmantel den Verschlussdeckel, den Vorschweißbund und den Losflansch halbkreisförmig überspannt. Von Vorteil ist hierbei, dass durch diese Maßnahme der komplette Flanschbereich des Kunststoffrohres vom äußeren Schutzmantel überspannt ist und somit alle wesentlichen Bauteile des Flanschbereiches geschützt werden.

In einer alternativen Ausführung kann vorgesehen sein, dass der äußere Schutzmantel einen ersten Mantelteil und einen zweiten Mantelteil aufweist, wobei der erste Mantelteil im Bereich des Losflansches angeordnet ist und der zweite Mantelteil im Bereich des Verschlussdeckels angeordnet ist. Die beiden Mantelteile können hierbei einfach am Kunststoffrohr montiert werden. Weiters kann durch den Einsatz von einzelnen Mantelteilen Material eingespart werden, wodurch der äußere Schutzmantel ein geringes Gewicht aufweist und billig hergestellt werden kann. In einer Weiterbildung kann vorgesehen sein, dass die beiden Mantelteile durch Verstrebungen miteinander verschweißt sind. Dadurch kann den beiden Mantelteilen ausreichende Stabilität verliehen werden, um mechanische Einwirkungen auf die beiden Mantelteile abfedern zu können.

Gemäß einer Weiterbildung ist es möglich, dass der äußere Schutzmantel mittels einem Befestigungsmittel, insbesondere einer Gewindestange mit dem Flanschbereich gekoppelt ist, wobei im Losflansch und im Verschlussdeckel Durchgangsbohrungen ausgebildet sind, welche von der Gewindestange durchragt werden und wobei an der Gewindestange innere Klemmmuttern angeordnet sind, mittels welchen der Verschlussdeckel und der Losflansch zueinander geklemmt sind und wobei der äußere Schutzmantel zwischen äußeren Klemmmuttern und den inneren Klemmmuttern geklemmt ist. Von Vorteil ist hierbei, dass durch diese Maßnahme der äußere Schutzmantel einfach am Kunststoffrohr angeordnet werden kann und darüber hinaus eine ausreichend feste Verbindung mit dem Kunststoffrohr aufweist.

Ferner kann es zweckmäßig sein, wenn zwischen den äußeren Klemmmuttern und dem äußeren Schutzmantel Klemmringe oder Klemmringsegmente angeordnet sind. Von Vorteil ist hierbei, dass durch die Klemmringe oder Klemmringsegmente die von äußeren Klemmmuttern auf den äußeren Schutzmantel einwirkende Kraft gleichmäßig aufgeteilt werden kann und somit eine lokale Überbeanspruchung des äußeren Schutzmantels vermieden wird.

Darüber hinaus kann vorgesehen sein, dass der äußere Schutzmantel aus einem Kunststoff, insbesondere einem thermoplastischen Kunststoff, gebildet ist. Von Vorteil ist hierbei, dass ein derartiger Kunststoff eine hohe Elastizität aufweist und somit gut für die Absorbierung von Stoßenergie geeignet ist.

Insbesondere kann vorgesehen sein, dass der äußere Schutzmantel aus Polyehylen gebildet ist. Dieser Kunststoff ist einfach zu verarbeiten und weist eine ausreichend hohe Festigkeit auf.

Weiters kann vorgesehen sein, dass der äußere Schutzmantel einzelne Schutzmantelsegmente umfasst, welche zum äußeren Schutzmantel verschweißt sind. Von Vorteil ist hierbei, dass die einzelnen Schutzmantelsegmente einfach hergestellt werden können und durch Verschweißung miteinander zum äußeren Schutzmantel verbunden werden können, wobei der äußere Schutzmantel sehr große Abmaße beispielsweise einen Außendurchmesser von 4,5 Meter und mehr aufweisen kann.

In einem ersten Ausführungsbeispiel kann vorgesehen sein, dass die einzelnen Schutzmantelsegmente durch Tiefziehen hergestellt sind.

In einem weiteren Ausführungsbeispiel kann vorgesehen sein, dass die einzelnen Schutzmantelsegmente durch Spritzguss hergestellt sind.

Gemäß einer besonderen Ausprägung ist es möglich, dass der Flanschschutz einen innenliegenden Schutzkörper, insbesondere einen Gummischlauch, umfasst, welcher den Umfang des Flanschbereiches umschließt. Von Vorteil ist hierbei, dass der innenliegende Schutzkörper zum Aufbringen zusätzlicher Stabilität in den Flanschschutz dienen kann. Insbesondere ein Gummischlauch weist eine gute Verformbarkeit auf und kann somit als innenliegender Schutzkörper verwendet werden. Insbesondere kann vorgesehen sein, dass der innenliegende Schutzkörper innerhalb des äußeren Schutzmantels angeordnet ist und den äußeren Schutzmantel nicht kontaktiert. Bei Verformung des äußeren Schutzmantels kann dieser am innenliegenden Schutzkörper anliegen und wird durch den innenliegenden Schutzkörper gestützt.

Entsprechend einer vorteilhaften Weiterbildung kann vorgesehen sein, dass an einer Stirninnenseite des am vorderen Längsende angeordneten Verschlussdeckels ein Zentrierring angeordnet ist. Von Vorteil ist hierbei, dass durch diese Maßnahme der Verschlussdeckel einfach relativ zum Kunststoffrohr positioniert werden kann.

Insbesondere kann es vorteilhaft sein, wenn ein Zugschäkel mit dem am vorderen Längsende angeordneten Verschlussdeckel gekoppelt ist, wobei zwischen dem Zugschäkel und dem Verschlussdeckel eine Drehlagerung ausgebildet ist, sodass das Zugschäkel relativ zum Verschlussdeckel verdrehbar am Verschlussdeckel angeordnet ist. Von Vorteil ist hierbei, dass durch diese Maßnahme das Zugseil, welches zwischen dem Schiff und der schwimmenden Rohrzusammenstellung angeordnet ist, nicht auf Torsion beansprucht wird. Dadurch kann vermieden werden, dass das Zugseil aufgrund der Verdrehung der schwimmenden Rohrzusammenstellung beschädigt bzw. abgetrennt wird. Dies ist insbesondere notwendig, da sich die schwimmende Rohrzusammenstellung während des Transportes auf dem Wasser ständig um seine Längsmittelachse dreht. Die Drehbewegung rührt daher, da durch den kühlenden Effekt des Wassers auf der Unterseite des Rohres eine geringere Wärmedehnung vorliegt, als an der Oberseite des Rohres, welche von der Sonne beschienen wird und sich das Rohr durch die unterschiedliche Wärmedehnung krümmt und somit dreht.

Ferner kann vorgesehen sein, dass am äußeren Schutzmantel an dessen radialer Außenseite und/oder an dessen radialer Innenseite Versteifungsrippen angeordnet sind. Von Vorteil ist hierbei, dass durch diese Maßnahme der äußere Schutzmantel versteift werden kann und somit eine geringere Wandstärke aufweisen kann, um gleiche Festigkeitswerte bzw. Dämpfungswerte zu erzielen, wie ein äußerer Schutzmantel ohne Versteifungsrippen und mit einer größeren Wandstärke.

Darüber hinaus kann vorgesehen sein, dass der äußere Schutzmantel eine Wandstärke zwischen 5mm und 25mm, insbesondere zwischen 7mm und 20mm aufweist. Von Vorteil ist hierbei, dass ein äußerer Schutzmantel mit einer derartigen Wandstärke eine ausreichende Stabilität aufweisen kann und trotzdem noch eine möglichst geringe Masse aufweist.

Erfindungsgemäß ist ein Verfahren zum Herstellen einer schwimmfähigen Rohrzusammenstellung vorgesehen, welches folgende Verfahrensschritte aufweist:
- Bereitstellen eines Kunststoffrohres mit einem hinteren Längsende an welchem ein hinterer Flanschbereich ausgebildet ist und einem vorderen Längsende an welchem ein vorderer Flanschbereich ausgebildet ist;
- Befestigen eines Verschlussdeckels am hinteren Längsende des Kunststoffrohres;
- Befestigen eines Verschlussdeckels am vorderen Längsende des Kunststoffrohres;
- Befestigen eines äußeren Schutzmantels eines Flanschschutzes am vorderen Längsende des Kunststoffrohres.

Vorteilhaft ist auch eine Ausprägung, gemäß welcher vorgesehen sein kann, dass der Verschlussdeckel mittels Gewindestangen und innerer Klemmmuttern am vorderen Längsende des Kunststoffrohres befestigt wird und dass im Verfahrensablauf anschließend einzelne Schutzmantelsegmente mittels äußerer Klemmmuttern an den Gewindestangen befestigt werden und dass die einzelnen Schutzmantelsegmente zum äußeren Schutzmantel verschweißt werden. Durch diese Maßnahme kann der äußere Schutzmantel einfach und kostengünstig hergestellt werden und darüber hinaus einfach und zeitsparend am zu schützenden Rohr montiert werden.

Die Ausdrücke hinteres Längsende und vorderes Längsende des Kunststoffrohres beziehen sich auf die Zugrichtung bzw. Transportrichtung beim Transport der Rohrzusammenstellung. Da das Kunststoffrohr vorzugsweise an beiden Längsenden gleich ausgebildet ist, wird das hintere Längsende und das vordere Längsende dadurch definiert, an welchem Längsende welcher Verschlussdeckel angeordnet ist. In einem besonderen Ausführungsbeispiel können an beiden Längsenden Verschlussdeckel angeordnet sein, welche zum Ziehen der Rohrzusammenstellung geeignet sind.

Zum besseren Verständnis der Erfindung wird diese anhand der nachfolgenden Figuren näher erläutert.

Es zeigen jeweils in stark vereinfachter, schematischer Darstellung:
- Fig. 1: eine perspektivische Ansicht eines ersten Ausführungsbeispiels einer schwimmfähigen Rohrzusammenstellung;
- Fig. 2: eine weitere perspektivische Ansicht des ersten Ausführungsbeispiels der schwimmfähigen Rohrzusammenstellung;
- Fig. 3: eine Schnittdarstellung in Draufsicht des ersten Ausführungsbeispiels der Flanschverbindung mit Flanschschutz;
- Fig. 4: eine Schnittdarstellung in isometrischer Ansicht der Flanschverbindung mit Flanschschutz;
- Fig. 5: eine Schnittdarstellung in isometrischer Ansicht eines Verschlussdeckels;
- Fig. 6: eine Schnittdarstellung in Draufsicht eines zweiten Ausführungsbeispiels der Flanschverbindung mit Flanschschutz;
- Fig. 7: eine Schnittdarstellung in Draufsicht eines dritten Ausführungsbeispiels der Flanschverbindung mit Flanschschutz.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

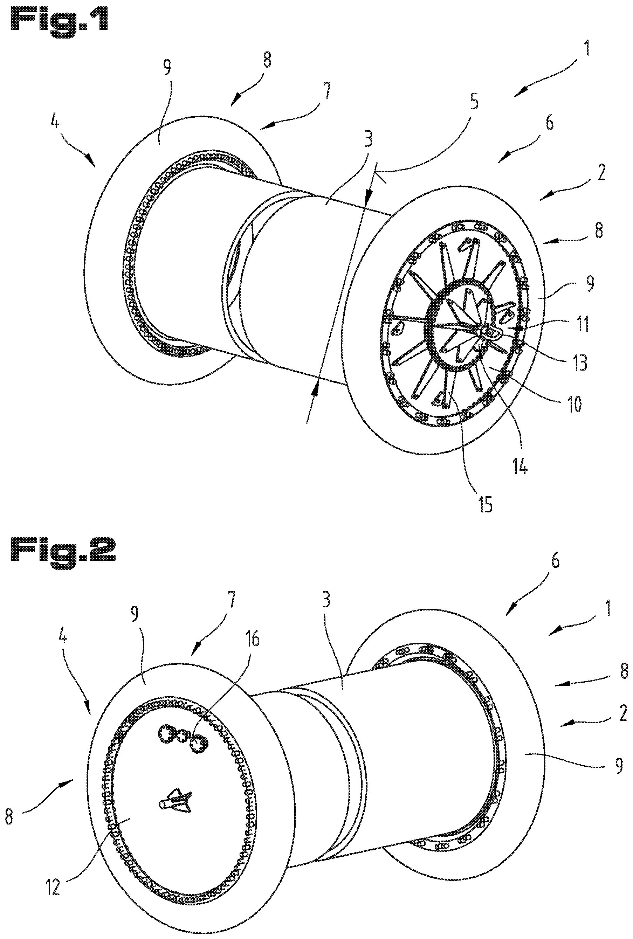

Die Figuren 1 und 2 zeigen ein erstes Ausführungsbeispiel einer schwimmfähigen Rohrzusammenstellung 1 in zwei verschiedenen Ansichten, wobei in Fig. 1 ein vorderes Längsende 2 eines Kunststoffrohres 3 im Vordergrund zu sehen ist und Fig. 2 ein hinteres Längsende 4 des Kunststoffrohres 3 im Vordergrund zu sehen ist. Das Kunststoffrohr 3 ist hierbei verkürzt und somit mittig geschnitten dargestellt.

Das Kunststoffrohr 3 kann beispielsweise einen Außendurchmesser 5 zwischen 100mm und 5.000mm, insbesondere zwischen 400mm und 4.000mm aufweisen. Der erfindungsgemäße Aufbau der Rohrzusammenstellung 1 hat sich insbesondere bei Kunststoffrohren 3 mit einem großen Durchmesser als vorteilhaft erwiesen.

Die Kunststoffrohre 3 werden vorzugsweise direkt in einem Gewässer beispielsweise in einem Meer verlegt. Insbesondere kann hierbei vorgesehen sein, dass die Kunststoffrohre 3 zum Transport von großen Mengen an Meerwasser, beispielsweise zur Kühlung von Kraftwerken bzw. von Tanks dienen. Durch den Aufbau schwimmfähigen Rohrzusammenstellung 1 können die Kunststoffrohre 3 hierbei direkt am offenen Meer bzw. an einem Gewässer mittels einem Zugschiff über große Distanzen transportiert werden.

Die Kunststoffrohre 3 können eine große Längserstreckung von einigen hundert Metern bis zu einer Länge von etwa 1.000 Meter aufweisen.

Insbesondere ist vorgesehen, dass die Kunststoffrohre 3 einen vorderen Flanschbereich 6 und einen hinteren Flanschbereich 7 aufweisen, an welchen mehrere der Kunststoffrohre 3 miteinander verschraubt werden um im Einsatzbereich eine durchgängige Rohrverbindung zu bilden. Um diesen Flanschbereich 6, 7 während dem Transport von mehreren schwimmenden Rohrzusammenstellungen 1 zu schützen, ist ein Flanschschutz 8 vorgesehen. Der Flanschschutz 8 weist einen äußeren Schutzmantel 9 auf, der den Flanschbereich 6, 7 umgibt und diesen somit vor Beschädigung durch das benachbarte Rohr schützt.

Weiters umfasst die schwimmfähige Rohrzusammenstellung 1 einen Verschlussdeckel 10 mit einer Zugvorrichtung 11, welcher am vorderen Längsende 2 des Kunststoffrohres 3 angeordnet ist. Die Zugvorrichtung 11 dient hierbei dazu, um die schwimmende Rohrzusammenstellung 1 mittels einem Zugseil mit einem zum Ziehen der Rohrzusammenstellung 1 vorgesehenen Schiff verbinden zu können.

Weiters ist ein hinterer Verschlussdeckel 12 ausgebildet, welcher zum Verschließen des hinteren Längsendes 4 des Kunststoffrohres 3 dient. Die beiden Verschlussdeckel 10, 12 können auch als Blindflansch bezeichnet werden, und dienen dazu, um das Innere des Kunststoffrohres 3 wasserdicht abschließen zu können. Dadurch kann im Inneren des Kunststoffrohres 3 ein mit Luft gefüllter Hohlraum bereitgestellt werden, wodurch die Rohrzusammenstellung 1 schwimmfähig wird.

Der vordere Verschlussdeckel 10 und der hintere Verschlussdeckel 12 können, wie aus den Fig. 1 und 2 ersichtlich einen unterschiedlichen Aufbau aufweisen. In einer alternativen nicht dargestellten Ausführungsvariante der Rohrzusammenstellung 1 kann auch vorgesehen sein, dass der vordere Verschlussdeckel 10 und der hintere Verschlussdeckel 12 einen gleichen Aufbau aufweisen.

Wie besonders gut aus Fig. 1 ersichtlich, weist die Zugvorrichtung 11 des vorderen Verschlussdeckels 10 einen Zugschäkel 13 auf, welches zum Anbinden eines Zugseils an den Verschlussdeckel 10 dient. Das Zugschäkel 13 ist vorzugsweise mittels einer Drehlagerung 14 mit dem vorderen Verschlussdeckel 10 gekoppelt.

Weiters kann vorgesehen sein, dass der vordere Verschlussdeckel 10 Versteifungsrippen 15 aufweist, welche zur Versteifung des Verschlussdeckels 10 dienen, um Zugkräfte aufnehmen zu können. Dies kann insbesondere notwendig sein, da das Zugschäkel 13 im Zentrum des vorderen Verschlussdeckels 10 angeordnet ist und die Kräfteeinleitung in das Kunststoffrohr 3 an dessen Außendurchmesser erfolgt.

Wie aus Fig. 2 ersichtlich, kann vorgesehen sein, dass im hinteren Verschlussdeckel 12 Zugangsöffnungen 16 angeordnet sind, welche beispielsweise für eine Druckprüfung bzw. Dichtheitsprüfung der schwimmfähigen Rohrzusammenstellung 1 verwendet werden können. Die Zugangsöffnungen 16 sind im schwimmfähigen Zustand der Rohrzusammenstellung 1 mit einem Blindflansch verschlossen.

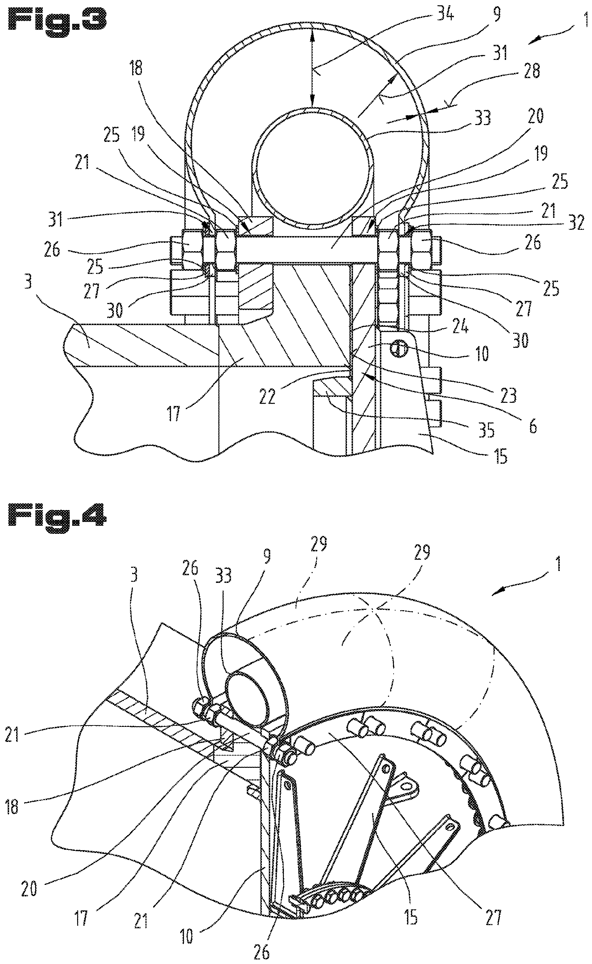

Die Fig. 3 und 4 zeigen eine Längsschnittdarstellung des Kunststoffrohres 3 im Bereich des vorderen Längsendes 2, wobei in der Fig. 3 eine Normalansicht auf die Schnittfläche gewählt wurde und in der Fig. 4 die Schnittfläche in einer perspektivischen Ansicht dargestellt ist.

Wie aus den Fig. 3 und 4 ersichtlich, kann vorgesehen sein, dass am Kunststoffrohr 3 ein Vorschweißbund 17 angeordnet ist, welcher zur Aufnahme eines Losflansches 18 dient. Der Vorschweißbund 17 ist hierbei mit der Stirnseite des Kunststoffrohres 3 verschweißt. Die Ausbildung des Vorschweißbundes 17 bzw. des Losflansches 18 dient dazu, um mittels einer Schraubverbindung mehrere der Kunststoffrohre 3 miteinander verbinden zu können. Hierzu sind im Losflansch 18 Durchgangsbohrungen 19 angeordnet, welche zur Aufnahme der Schraubverbindung dienen.

Wie in den Fig. 3 und 4 besonders gut ersichtlich, ist vorgesehen, dass die Rohrzusammenstellung 1 den Flanschschutz 8, insbesondere den Schutzmantel 9 aufweist, welcher zum Schutz des Flanschbereiches 6 dient.

Der Verschlussdeckel 10 kann ebenfalls Durchgangsbohrungen 19 aufweisen, welche das gleiche Lochbild aufweisen wie die Durchgangsbohrungen 19 im Losflansch 18.

Insbesondere kann vorgesehen sein, dass der Verschlussdeckel 10 mittels einer Gewindestange 20 und mittels innerer Klemmmuttern 21 mit dem Losflansch 18 verschraubt ist. Zur Abdichtung des Kunststoffrohres 3 kann hierbei vorgesehen sein, dass zwischen einer Stirninnenseite 22 des Verschlussdeckels 10 und einer Stirnseite 23 des Vorschweißbundes 17 eine Dichtung 24 angeordnet ist. Weiters kann vorgesehen sein, dass zwischen der inneren Klemmmutter 21 und dem Losflansch 18 bzw. zwischen der inneren Klemmmutter 21 und dem Verschlussdeckel 10 einen Beilagscheibe oder Sprengring 25 angeordnet ist.

Weiters kann vorgesehen sein, dass der äußere Schutzmantel 9 jeweils mittels einer äußeren Klemmmutter 26 relativ zur inneren Klemmmutter 21 geklemmt ist. Der äußere Schutzmantel 9 kann hierbei den Losflansch 18, den Vorschweißbund 17 und den Verschlussdeckel 10 überspannen. Weiters können Klemmringe oder Klemmringsegmente 27 vorgesehen sein, welche zwischen der äußeren Klemmmutter 26 und dem äußeren Schutzmantel 9 angeordnet sind und zur gleichmäßigen Kräfteeinleitung in den äußeren Schutzmantel 9 dienen. Die Klemmringe oder Klemmringsegmente 27 können aus einem metallischen Werkstoff, wie etwa Stahl gebildet sein. Insbesondere kann vorgesehen sein, dass über den Umfang verteilt mehrere Klemmringsegmente 27 angeordnet sind.

Weiters können ebenfalls Beilagscheiben oder Sprengringe 25 zwischen der äußeren Klemmmutter 26 und der Klemmringe oder Klemmringsegmente 27 angeordnet sein.

In einer weiteren nicht dargestellten Ausführungsvariante kann auch vorgesehen sein, dass zwischen der inneren Klemmmutter 21 und dem äußeren Schutzmantel 9 ebenfalls Klemmringe oder Klemmringsegmente 27 angeordnet sind.

Wie aus den Fig. 3 und 4 ersichtlich kann vorgesehen sein, dass der äußere Schutzmantel 9 eine konstante Wandstärke 28 aufweist. Die Wandstärke 28 ist hierbei derart bemessen, dass der äußere Schutzmantel 9 unter möglichst geringem Materialaufwand hergestellt werden kann und die Wandstärke 28 trotzdem ausreichend groß ist, damit der äußere Schutzmantel 9 entsprechende Stoßbelastungen aufnehmen kann.

Wie aus Fig. 4 ersichtlich kann vorgesehen sein, dass der äußere Schutzmantel 9 aus einzelnen Schutzmantelsegmenten 29 gebildet ist, welche miteinander verschweißt sind um den äußeren Schutzmantel 9 zu bilden.

Die einzelnen Schutzmantelsegmente 29 können beispielsweise durch Spritzguss oder durch Tiefziehen hergestellt werden. Insbesondere kann vorgesehen sein, dass die einzelnen Schutzmantelsegmente 29 in deren Abmaßen derart gewählt werden, dass sie in einer herkömmlichen Spritzgussmaschine oder Tiefziehmaschine hergestellt werden können.

Wie aus den Fig. 3 und 4 ersichtlich kann vorgesehen sein, dass der äußere Schutzmantel 9 torusförmig ausgebildet ist wobei die dem Zentrum zugewandte Seite des Torus offen ist und zur Aufnahme des Flanschbereiches 6 dient.

Weiters können an den Torus Befestigungslaschen 30 anschließen, welche von Durchgangsbohrungen 31 durchragt werden und zur Klemmung mittels der Gewindestange 20 dienen.

Ein Radius 31 des den Querschnitt des Torus bildenden Kreissegmentes ist vorzugsweise so groß gewählt, dass der äußere Schutzmantel 9 einen ausreichenden Abstand vom Flanschbereich 6, insbesondere vom Losflansch 18 und vom Vorschweißbund 17 aufweist, um diese auch bei kraftbedingter Verformung des äußeren Schutzmantels 9 vor Beschädigung schützen zu können.

Wie aus den Fig. 3 und 4 weiters ersichtlich, kann zusätzlich vorgesehen sein, dass ein innenliegender Schutzkörper 33 ausgebildet ist, welcher radial gesehen außenseitig am Vorschweißbund 17 angeordnet ist. Der innenliegende Schutzkörper 33 kann durch einen Schlauch gebildet sein, welcher ebenfalls torusförmig um den Vorschweißbund 17 gelegt ist. Dies kann insbesondere ein Gummischlauch mit einer größeren Wandstärke sein.

Der innenliegende Schutzkörper 33 kann zusätzlich mit Druckluft oder einem sonstigen Medium gefüllt sein um eine zusätzliche Dämpfungswirkung für den äußeren Schutzmantel 9 zu erreichen. Der innenliegende Schutzkörper 33 dient insbesondere dazu, um bei übermäßiger Verformung des äußeren Schutzmantels 9 eine weitere Dämpfungseinheit zu bilden, um zu verhindern, dass der äußere Schutzmantel 9 am Losflansch 18 bzw. am Vorschweißbund 17 zum Anliegen kommt. Um eine größtmögliche Menge an Energie am äußeren Schutzmantel 9 absorbieren zu können ist vorgesehen, dass der äußere Schutzmantel 9 in einem Abstand 34 zum innenliegenden Schutzkörper 33 angeordnet ist.

Um den Verschlussdeckel 10 bei der Montage am Kunststoffrohr 3 zentrieren zu können, kann ein Zentrierring 35 vorgesehen sein, welcher an der Stirninnenseite 22 des Verschlussdeckels 10 angeordnet ist.

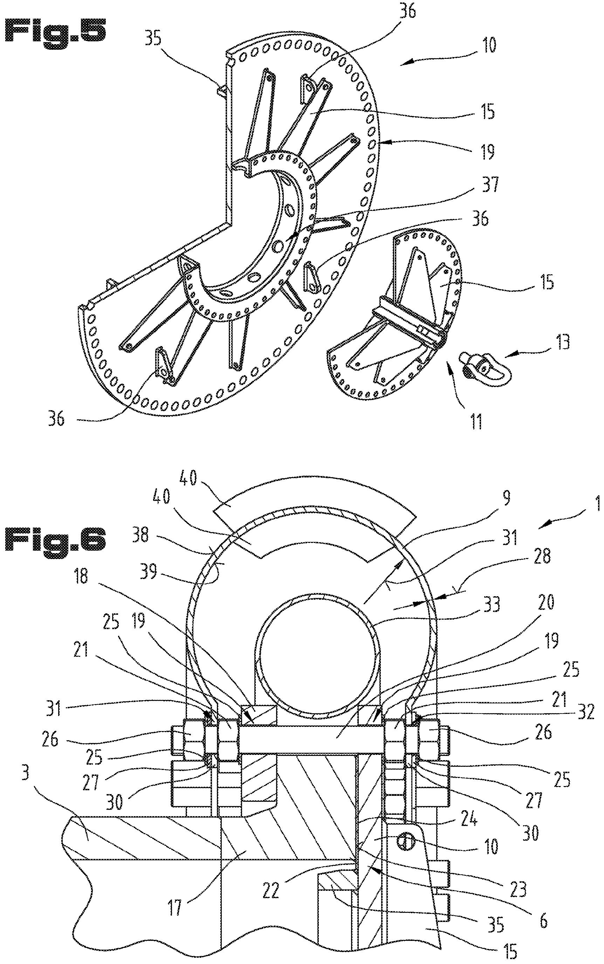

Fig. 5 zeigt eine perspektivische Schnittdarstellung eines Ausführungsbeispiels des Verschlussdeckels 10. Wie aus Fig. 5 ersichtlich, kann vorgesehen sein, dass am Verschlussdeckel 10 Hebelaschen 36 angeordnet sind, welche zum Manipulieren und zum Positionieren des Verschlussdeckels 10 dienen. Weiters kann vorgesehen sein, dass die Zugvorrichtung 11 mittels einer Flanschverbindung mit dem Verschlussdeckel 10 gekoppelt ist. Die Zugvorrichtung 11 kann hierbei ebenfalls Versteifungsrippen 15 aufweisen. Weiters kann vorgesehen sein, dass im Flanschbereich zwischen der Zugvorrichtung 11 und dem Verschlussdeckel 10 in Auslassbohrungen 37 angeordnet sind, welche zur Entwässerung des Verschlussdeckels 10 dienen.

In Fig. 5 ist ebenfalls die Drehlagerung 14 zur drehbaren Aufnahme des Zugschäkels 13 gut ersichtlich.

Anhand der Fig. 3 und 4 wird das Verfahren zur Herstellung eines Kunststoffrohres 3 bzw. der Rohrzusammenstellung 1 beschrieben.

Vorzugsweise kann vorgesehen sein, dass das Kunststoffrohr 3 aus der Extrusionsmaschine heraus in ein Gewässer extrudiert wird, welches im Nahbereich der Extrusionsmaschine angeordnet ist. Um das Kunststoffrohr 3 schwimmfähig zu halten, wird hierbei die in der Extrusion vordere Stirnseite des Kunststoffrohres 3 mit einem Dichtballon verschlossen, wodurch das Kunststoffrohr 3 kontinuierlich ins Wasser geführt werden kann.

Bei Erreichen der maximalen Extrusionslänge, beispielsweise 600 Meter wird der Extrusionsvorgang gestoppt. Anschließend wird der zuletzt extrudierte Bereich des Kunststoffrohres 3 abgetrennt und in diesem Bereich ein Losflansch 18 auf das Kunststoffrohr 3 aufgeschoben. Anschließend wird ein Vorschweißbund 17 mit dem abgetrennten Ende des Kunststoffrohres 3 verschweißt. Dadurch wird der vordere Flanschbereich 6 ausgebildet. Nun kann der vordere Verschlussdeckel 10 unter Einbringung der Dichtung 24 an der Stirnseite 23 des Vorschweißbundes 17 angelegt werden und mittels Gewindestangen 20 und innerer Klemmmuttern 21 mit dem Losflansch 18 verschraubt werden.

In einem weiteren Verfahrensschritt können die einzelnen Schutzmantelsegmente 29 mittels der äußeren Klemmmuttern 26 mit der Gewindestange 20 verschraubt werden um somit die Grundform des äußeren Schutzmantels 9 zu bilden. Anschließend können die einzelnen Schutzmantel segmente 29 miteinander verschweißt werden um zu einem stabilen Schutzmantel 9 verbunden zu werden.

In einer alternativen Ausführungsvariante kann vorgesehen sein, dass die einzelnen Schutzmantelsegmente 29 zumindest teilweise schon vor der Montage an den Gewindestangen 20 zusammengeschweißt werden und anschließend in größeren Teilsegmenten an den Gewindestangen 20 befestigt werden. Anschließend können die verbleibenden offenen Schellen zwischen den einzelnen Schutzmantelsegmenten 29 miteinander verschweißt werden.

In wieder einem anderen Ausführungsbeispiel ist es auch denkbar, dass der äußere Schutzmantel 9 aus einem Stück gefertigt ist oder zur Gänze vor Montage am Kunststoffrohr 3 vorgefertigt ist.

In wieder einer anderen Ausführungsvariante kann auch vorgesehen sein, dass vor Montage des äußeren Schutzmantels 9 der innenliegende Schutzkörper 33 um den Flanschbereich 6 angeordnet wird.

In der Fig. 6 ist eine weitere und gegebenenfalls für sich eigenständige Ausführungsform der Rohrzusammenstellung 1 gezeigt, wobei wiederum für gleiche Teile gleiche Bezugszeichen bzw. Bauteilbezeichnungen wie in den vorangegangenen Figuren 1 bis 5 verwendet werden. Um unnötige Wiederholungen zu vermeiden, wird auf die detaillierte Beschreibung in den vorangegangenen Figuren 1 bis 5 hingewiesen bzw. Bezug genommen.

Wie aus Fig. 6 ersichtlich, kann vorgesehen sein, dass an der radialen Außenseite 38 des äußeren Schutzmantels 9 und/ oder an der radialen Innenseite 39 des äußeren Schutzmantels 9 Versteifungsrippen 40 angeordnet sind, welche zusätzlich zur Aufnahme von Absorbsionsenergie dienen. Über den Umfang verteilt können mehrere Versteifungsrippen 40 gleichmäßig verteilt angeordnet sein.

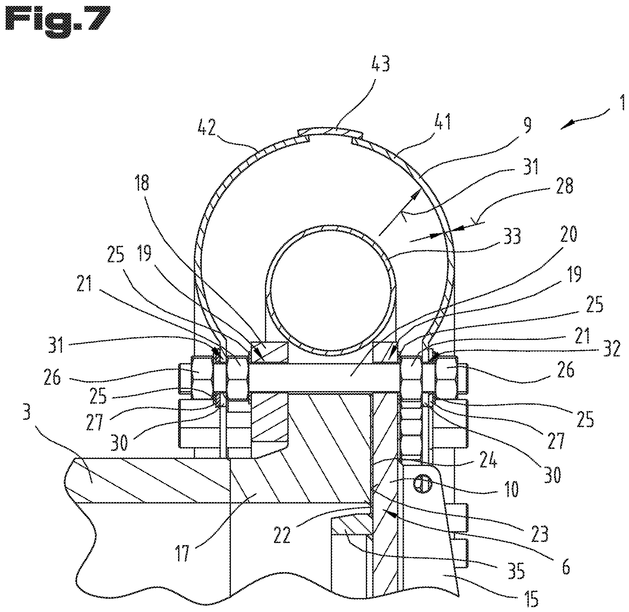

In der Fig. 7 ist eine weitere und gegebenenfalls für sich eigenständige Ausführungsform der Rohrzusammenstellung 1 gezeigt, wobei wiederum für gleiche Teile gleiche Bezugszeichen bzw. Bauteilbezeichnungen wie in den vorangegangenen Figuren 1 bis 5 verwendet werden. Um unnötige Wiederholungen zu vermeiden, wird auf die detaillierte Beschreibung in den vorangegangenen Figuren 1 bis 5 hingewiesen bzw. Bezug genommen.

Wie aus Fig. 7 ersichtlich kann vorgesehen sein, dass der äußere Schutzmantel 9 einen ersten Mantelteil 41 und einen zweiten Mantelteil 42 umfasst, welche gemeinsam die Form des äußeren Schutzmantels 9 abbilden. Derartige Mantelteile weisen den Vorteil auf, dass sie materialsparend ausgebildet sein können bzw. einfach am Kunststoffrohr 3 montiert werden können. Darüber hinaus kann vorgesehen sein, dass die einzelnen Mantelteile 41, 42 mittels einer Verbindungsrippe 43 miteinander gekoppelt sind. Über den Umfang verteilt können mehrere dieser Verbindungsrippen 43 gleichmäßig aufgeteilt angeordnet sein.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Rohrzusammenstellung | 28 | Wandstärke äußerer Schutzmantel |
| 2 | vorderes Längsende | 29 | Schutzmantelsegmente |
| 3 | Kunststoffrohr | 30 | Befestigungslasche |
| 4 | hinteres Längsende | 31 | Radius |
| 5 | Außendurchmesser Kunststoffrohr | 32 | Durchgangsbohrung Befestigungslasche |
| 6 | vorderer Flanschbereich | | |
| 7 | hinterer Flanschbereich | 33 | innenliegender Schutzkörper |
| 8 | Flanschschutz | 34 | Abstand |
| 9 | äußerer Schutzmantel | 35 | Zentrierring |
| 10 | vorderer Verschlussdeckel mit Zugvorrichtung | 36 | Hebelasche |
| | | 37 | Auslassbohrung |
| 11 | Zugvorrichtung | 38 | radiale Außenseite äußerer Schutzmantel |
| 12 | hinterer Verschlussdeckel | | |
| 13 | Zugschäkel | 39 | radiale Innenseite äußerer Schutzmantel |
| 14 | Drehlagerung | | |
| 15 | Versteifungsrippe Verschlussdeckel | 40 | Versteifungsrippe |
| | | 41 | erster Mantelteil |
| 16 | Zugangsöffnungen | 42 | zweiter Mantelteil |
| 17 | Vorschweißbund | 43 | Verbindungsrippe |
| 18 | Losflansch | | |
| 19 | Durchgangsbohrung | | |
| 20 | Gewindestange | | |
| 21 | innere Klemmmutter | | |
| 22 | Stirninnenseite Verschlussdeckel | | |
| 23 | Stirnseite Vorschweißbund | | |
| 24 | Dichtung | | |
| 25 | Beilagscheibe oder Sprengring | | |
| 26 | äußere Klemmmutter | | |
| 27 | Klemmring oder Klemmringsegment | | |

## Patentansprüche

1. Schwimmfähige Rohrzusammenstellung (1) umfassend:
- ein Kunststoffrohr (3) mit einem hinteren Längsende (4), an welchem ein hinterer Flanschbereich (7) ausgebildet ist und einem vorderen Längsende (2), an welchem ein vorderer Flanschbereich (6) ausgebildet ist;
- einen am hinteren Längsende (4) angeordneten Verschlussdeckel (12);
- einen am vorderen Längsende (2) angeordneten Verschlussdeckel (10),
wobei eine Zugvorrichtung (11) am Verschlussdeckel (10) angeordnet ist, und dass zumindest am vorderen Längsende (2) ein Flanschschutz (8) mit einem äußeren Schutzmantel (9) angeordnet ist, wobei der äußere Schutzmantel (9) gegenüber dem Außendurchmesser (5) des Kunststoffrohres (3) radial vorstehend ausgebildet ist, **dadurch gekennzeichnet, dass** der vordere Flanschbereich (6) und/oder der hintere Flanschbereich (7) einen Losflansch (18) aufweist, welcher an einem Vorschweißbund (17) abgestützt ist, und dass der äußere Schutzmantel (9) des Flanschschutzes (8) mit dem Losflansch (18) verschraubt ist.

2. Schwimmfähige Rohrzusammenstellung nach Anspruch 1, **dadurch gekennzeichnet, dass** der äußere Schutzmantel (9) in seiner Grundform als Rotationskörper, insbesondere als Torus, ausgebildet ist, welcher in dessen dem Rotationszentrum zugewandter Seite offen ist und den Flanschbereich (6, 7) aufnimmt.

3. Schwimmfähige Rohrzusammenstellung nach Anspruch 2, **dadurch gekennzeichnet, dass** der äußere Schutzmantel (9) den Verschlussdeckel (12, 10), den Vorschweißbund (17) und den Losflansch (18) halbkreisförmig überspannt.

4. Schwimmfähige Rohrzusammenstellung nach Anspruch 2, **dadurch gekennzeichnet, dass** der äußere Schutzmantel (9) einen ersten Mantelteil (41) und einen zweiten Mantelteil (42) aufweist, wobei der erste Mantelteil (41) im Bereich des Losflansches (18) angeordnet ist und der zweite Mantelteil (42) im Bereich des Verschlussdeckels (12, 10) angeordnet ist.

5. Schwimmfähige Rohrzusammenstellung nach Anspruch 3 oder 4, **dadurch gekennzeichnet, dass** der äußere Schutzmantel (9) mittels einem Befestigungsmittel, insbesondere einer Gewindestange (20), mit dem Flanschbereich (7, 6) gekoppelt ist, wobei im Losflansch (18) und im Verschlussdeckel (12, 10) Durchgangsbohrungen (19) ausgebildet sind, welche von der Gewindestange (20) durchragt werden und wobei an der Gewindestange (20) innere Klemmmuttern (21) angeordnet sind, mittels welchen der Verschlussdeckel (12, 10) und der Losflansch (18) zueinander geklemmt sind und wobei der äußere Schutzmantel (9) zwischen äußeren Klemmmuttern (26) und den inneren Klemmmuttern (21) geklemmt ist.

6. Schwimmfähige Rohrzusammenstellung nach Anspruch 5, **dadurch gekennzeichnet, dass** zwischen den äußeren Klemmmuttern (26) und dem äußeren Schutzmantel (9) Klemmringe oder Klemmringsegmente (27) angeordnet sind.

7. Schwimmfähige Rohrzusammenstellung nach einem der vorhergehenden Ansprüche, **dadurch gekennzeichnet, dass** der äußere Schutzmantel (9) aus einem Kunststoff, insbesondere einem thermoplastischen Kunststoff, gebildet ist.

8. Schwimmfähige Rohrzusammenstellung nach Anspruch 7, **dadurch gekennzeichnet, dass** der äußere Schutzmantel (9) aus Polyehylen gebildet ist.

9. Schwimmfähige Rohrzusammenstellung nach einem der vorhergehenden Ansprüche, **dadurch gekennzeichnet, dass** der äußere Schutzmantel (9) einzelne Schutzmantelsegmente (29) umfasst zum äußeren Schutzmantel (9) verschweißt sind.

10. Schwimmfähige Rohrzusammenstellung nach einem der vorhergehenden Ansprüche, **dadurch gekennzeichnet, dass** der Flanschschutz (8) einen innenliegenden Schutzkörper (33), insbesondere einen Gummischlauch, umfasst, welcher den Umfang des Flanschbereiches (7, 6) umschließt.

11. Schwimmfähige Rohrzusammenstellung nach einem der vorhergehenden Ansprüche, **dadurch gekennzeichnet, dass** an einer Stirninnenseite (22) des am vorderen Längsende (2) angeordneten Verschlussdeckels (10) ein Zentrierring (35) angeordnet ist.

12. Schwimmfähige Rohrzusammenstellung nach einem der vorhergehenden Ansprüche, **dadurch gekennzeichnet, dass** ein Zugschäkel (13) mit dem am vorderen Längsende (2) angeordneten Verschlussdeckel (10) gekoppelt ist, wobei zwischen dem Zugschäkel (13) und dem Verschlussdeckel (10) eine Drehlagerung (14) ausgebildet ist, sodass das Zugschäkel (13) relativ zum Verschlussdeckel (10) verdrehbar am Verschlussdeckel (10) angeordnet ist.

13. Schwimmfähige Rohrzusammenstellung nach einem der vorhergehenden Ansprüche, **dadurch gekennzeichnet, dass** am äußeren Schutzmantel (9) an dessen radialer Außenseite (38) und/oder an dessen radialer Innenseite (39) Versteifungsrippen (40) angeordnet sind.

14. Schwimmfähige Rohrzusammenstellung nach einem der vorhergehenden Ansprüche, **dadurch gekennzeichnet, dass** der äußere Schutzmantel (9) eine Wandstärke (28) zwischen 5mm und 25mm, insbesondere zwischen 7mm und 20mm aufweist.

15. Verfahren zum Herstellen einer schwimmfähigen Rohrzusammenstellung (1) nach einem der vorhergehenden Ansprüche, umfassend die Verfahrensschritte:
- Bereitstellen eines Kunststoffrohres (3) mit einem hinteren Längsende (4) an welchem ein hinterer Flanschbereich (7) ausgebildet ist und einem vorderen Längsende (2) an welchem ein vorderer Flanschbereich (6) ausgebildet ist;
- Befestigen eines Verschlussdeckels (12) am hinteren Längsende (4) des Kunststoffrohres (3);
- Befestigen eines Verschlussdeckels (10) am vorderen Längsende (2) des Kunststoffrohres (3);
- Befestigen eines äußeren Schutzmantels (9) eines Flanschschutzes (8) am vorderen Längsende (2) des Kunststoffrohres (3),
**dadurch gekennzeichnet, dass** der vordere Flanschbereich (6) und/oder der hintere Flanschbereich (7) einen Losflansch (18) aufweist, welcher an einem Vorschweißbund (17) abgestützt ist, und dass der äußere Schutzmantel (9) des Flanschschutzes (8) mit dem Losflansch (18) verschraubt wird.

16. Verfahren nach Anspruch 15, **dadurch gekennzeichnet, dass** der Verschlussdeckel (12, 10) mittels Gewindestangen (20) und innerer Klemmmuttern (21) am vorderen Längsende (2) des Kunststoffrohres (3) befestigt wird und dass im Verfahrensablauf anschließend einzelne Schutzmantelsegmente (29) mittels äußerer Klemmmuttern (26) an den Gewindestangen (20) befestigt werden und dass die einzelnen Schutzmantelsegmente (29) zum äußeren Schutzmantel (9) verschweißt werden.

## Claims

1. A floatable pipe combination (1) comprising:
- a plastic pipe (3) having a rear longitudinal end (4), on which a rear flange region (7) is formed, and a front longitudinal end (2), on which a front flange region (6) is formed;
- a closing cover (12) arranged on the rear longitudinal end (4);
- a closing cover (10) arranged on the front longitudinal end (2),
wherein a pulling device (11) is arranged on the closing cover (10), and that at least on the front longitudinal end (2), a flange protection (8) with an outer protective covering (9) is arranged, wherein the outer protective covering (9) is formed to radially project with respect to the outer diameter (5) of the plastic pipe (3), **characterized in that** the front flange region (6) and/or the rear flange region (7) comprises a loose flange (18), which is supported on a welding neck (17), and that the outer protective covering (9) of the flange protection (8) is screwed together with the loose flange (18).

2. The floatable pipe combination according to claim 1, **characterized in that** the outer protective covering (9) is formed in its base shape as a rotational body, in particular as a torus, which is open on its side facing the center of rotation and accommodates the flange area (6, 7).

3. The floatable pipe combination according to claim 2, **characterized in that** the outer protective covering (9) spans the closing cover (12, 10), the welding neck (17) and the loose flange (18) in a semicircle.

4. The floatable pipe combination according to claim 2, **characterized in that** the outer protective covering (9) comprises a first covering part (41) and a second covering part (42), wherein the first covering part (41) is arranged in the region of the loose flange (18) and the second covering part (42) is arranged in the region of the closing cover (12, 10).

5. The floatable pipe combination according to claim 3 or 4, **characterized in that** the outer protective covering (9) is coupled to the flange region (7, 6) by means of a fastening means, in particular a threaded rod (20), wherein in the loose flange (18) and in the closing cover (12, 10) through-bores (19) are formed which are penetrated by the threaded rod (20) and wherein on the threaded rod (20) inner clamping nuts (21) are arranged by means of which the closing cover (12, 10) and the loose flange (18) are clamped to each other and wherein the outer protective covering (9) is clamped between outer clamping nuts (26) and the inner clamping nuts (21).

6. The floatable pipe combination according to claim 5, **characterized in that** clamping rings or clamping ring segments (27) are arranged between the outer clamping nuts (26) and the outer protective covering (9).

7. The floatable pipe combination according to one of the preceding claims, **characterized in that** the outer protective covering (9) is formed from a plastic material, in particular a thermoplastic material.

8. The floatable pipe combination according to claim 7, **characterized in that** the outer protective covering (9) is formed from polyethylene.

9. The floatable pipe combination according to one of the preceding claims, **characterized in that** the outer protective covering (9) comprises individual protective covering segments (29), which are welded together to form the outer protective covering (9).

10. The floatable pipe combination according to one of the preceding claims, **characterized in that** the flange protection (8) comprises an internal protective body (33), in particular a rubber hose, which encloses the circumference of the flange region (7, 6).

11. The floatable pipe combination according to one of the preceding claims, **characterized in that** a centering ring (35) is arranged on an inner end face (22) of the closing cover (10) arranged on the front longitudinal end (2).

12. The floatable pipe combination according to one of the preceding claims, **characterized in that** a pulling shackle (13) is coupled to the closing cover (10) arranged at the front longitudinal end (2), wherein a pivot bearing (14) is formed between the pulling shackle (13) and the closing cover (10) such that the pulling shackle (13) is arranged on the closing cover (10) so as to be rotatable relative to the closing cover (10).

13. The floatable pipe combination according to one of the preceding claims, **characterized in that** stiffening ribs (40) are arranged on the outer protective covering (9) on its radially outer side (38) and/or on its radially inner side (39).

14. The floatable pipe combination according to one of the preceding claims, **characterized in that** the outer protective covering (9) has a wall thickness (28) of between 5mm and 25mm, in particular between 7mm and 20mm.

15. A method for producing a floatable pipe combination (1) according to one of the preceding claims, comprising the method steps:
- providing a plastic pipe (3) having a rear longitudinal end (4), on which a rear flange region (7) is formed, and a front longitudinal end (2), on which a front flange region (6) is formed;
- mounting a closing cover (12) to the rear longitudinal end (4) of the plastic pipe (3);
- mounting a closing cover (10) to the front longitudinal end (2) of the plastic pipe (3);
- mounting an outer protective covering (9) of a flange protection (8) to the front longitudinal end (2) of the plastic pipe (3)
**characterized in that** the front flange region (6) and/or the rear flange region (7) comprises a loose flange (18), which is supported on a welding neck (17), and that the outer protective covering (9) of the flange protection (8) is screwed together with the loose flange (18).

16. The method according to claim 15, **characterized in that** the closing cover (12, 10) is mounted to the front longitudinal end (2) of the plastic pipe (3) by means of threaded rods (20) and inner clamping nuts (21) and that subsequently in the course of the method individual protective covering segments (29) are mounted to the threaded rods (20) by means of outer clamping nuts (26) and that the individual protective covering segments (29) are welded together to form the outer protective covering (9).

## Revendications

1. Ensemble de tube flottant (1) comprenant :
- un tube en matière plastique (3) avec une extrémité longitudinale arrière (4), sur laquelle est réalisée une partie de bride arrière (7), et une extrémité longitudinale avant (2), sur laquelle est réalisée une partie de bride avant (6) ;
- un couvercle de fermeture (12) disposé sur l'extrémité longitudinale arrière (4) ;
- un couvercle de fermeture (10) disposé sur l'extrémité longitudinale avant (2) ;
dans lequel un dispositif de traction (11) est disposé sur le couvercle de fermeture (10) et, au moins sur l'extrémité longitudinale avant (2), est disposée une protection de bride (8) avec une enveloppe de protection externe (9), dans lequel l'enveloppe de protection externe (9) est réalisée en saillie radialement par rapport au diamètre extérieur (5) du tube en matière plastique (3), **caractérisé en ce que** la partie de bride avant (6) et/ou la partie de bride arrière (7) comprend une bride libre (18) qui s'appuie contre un col de pré-soudure (17) et **en ce que** l'enveloppe de protection externe (9) de la protection de bride (8) est vissée avec la bride libre (18).

2. Ensemble de tube flottant selon la revendication 1, **caractérisé en ce que** l'enveloppe de protection externe (9) est conçue, dans sa forme de base, comme un solide de révolution, plus particulièrement comme un tore, qui est ouvert sur son côté orienté vers le centre de rotation et qui loge la partie de bride (6, 7).

3. Ensemble de tube flottant selon la revendication 2, **caractérisé en ce que** l'enveloppe de protection externe (9) enjambe le couvercle de fermeture (12, 10), le col de pré-soudure (17) et la bride libre (18) sous une forme semi-circulaire.

4. Ensemble de tube flottant selon la revendication 2, **caractérisé en ce que** l'enveloppe de protection externe (9) comprend une première partie d'enveloppe (41) et une deuxième partie d'enveloppe (42), dans lequel la première partie d'enveloppe (41) est disposée au niveau de la bride libre (18) et la deuxième partie d'enveloppe (42) est disposée au niveau du couvercle de fermeture (12, 10).

5. Ensemble de tube flottant selon la revendication 3 ou 4, **caractérisé en ce que** l'enveloppe de protection externe (9) est couplée à l'aide d'un moyen de fixation, plus particulièrement d'une tige filetée (20), avec la partie de bride (7, 6), dans lequel, dans la bride libre (18) et dans le couvercle de fermeture (12, 10), sont réalisés des perçages de passage (19), qui sont traversés par la tige filetée (20) et dans lequel, sur la tige filetée (20), sont disposées des écrous de serrage internes (21) au moyen desquels le couvercle de fermeture (12, 10) et la bride libre (18) sont serrés entre eux et dans lequel l'enveloppe de protection externe (9) est serrée entre des écrous de serrage externes (26) et les écrous de serrage internes (21).

6. Ensemble de tube flottant selon la revendication 5, **caractérisé en ce que**, entre les écrous de serrage externes (26) et l'enveloppe de protection externe (9), sont disposées des bagues de serrage ou des segments annulaires de serrage (27).

7. Ensemble de tube flottant selon l'une des revendications précédentes, **caractérisé en ce que** l'enveloppe de protection externe (9) est constituée d'une matière plastique, plus particulièrement d'une matière plastique thermoplastique.

8. Ensemble de tube flottant selon la revendication 7, **caractérisé en ce que** l'enveloppe de protection externe (9) est constituée de polyéthylène.

9. Ensemble de tube flottant selon l'une des revendications précédentes, **caractérisé en ce que** l'enveloppe de protection externe (9) comprend des segments d'enveloppe de protection individuels (29) qui sont soudés afin d'obtenir l'enveloppe de protection externe (9).

10. Ensemble de tube flottant selon l'une des revendications précédentes, **caractérisé en ce que** la protection de bride (8) comprend un corps de protection interne (33), plus particulièrement une gaine en caoutchouc, qui entoure la circonférence de la partie de bride (7, 6).

11. Ensemble de tube flottant selon l'une des revendications précédentes, **caractérisé en ce que**, sur une face interne frontale (22) du couvercle de fermeture (10) disposé sur l'extrémité longitudinale avant (2), est disposée une bague de centrage (35).

12. Ensemble de tube flottant selon l'une des revendications précédentes, **caractérisé en ce qu'**une manille de traction (13) est couplée avec le couvercle de fermeture (10) disposé sur l'extrémité longitudinale avant (2), dans lequel, entre la manille de traction (13) et le couvercle de fermeture (10), est réalisé un palier de rotation (14), de façon à ce que la manille de traction (13) soit disposée sur le couvercle de fermeture (10) de manière rotative par rapport au couvercle de fermeture (10).

13. Ensemble de tube flottant selon l'une des revendications précédentes, **caractérisé en ce que**, sur l'enveloppe de protection externe (9), sur sa face radiale externe (38) et/ou sur sa face radiale interne (39), sont disposées de nervures de rigidification (40).

14. Ensemble de tube flottant selon l'une des revendications précédentes, **caractérisé en ce que** l'enveloppe de protection externe (9) présente une épaisseur de paroi (28) entre 5 mm et 25 mm, plus particulièrement entre 7 mm et 20 mm.

15. Procédé de fabrication d'un ensemble de tube flottant (1) selon l'une des revendications précédentes, comprenant les étapes suivantes :
- mise à disposition d'un tube en matière plastique (3) avec une extrémité longitudinale arrière (4), sur laquelle est réalisée une partie de bride arrière (7), et une extrémité longitudinale avant (2), sur laquelle est réalisée une partie de bride avant (6) ;
- fixation d'un couvercle de fermeture (12) à l'extrémité longitudinale arrière (4) du tube en matière plastique (3) ;
- fixation d'un couvercle de fermeture (10) à l'extrémité longitudinale avant (2) du tube en matière plastique (3) ;
- fixation d'une enveloppe de protection externe (9) d'une protection de bride (8) à l'extrémité longitudinale avant (2) du tube en matière plastique (3),
**caractérisé en ce que** la partie de bride avant (6) et/ou la partie de bride arrière (7) comprend une bride libre (18) qui s'appuie contre un col de pré-soudure (17) et **en ce que** l'enveloppe de protection externe (9) de la protection de bride (8) est vissée avec la bride libre (18).

16. Procédé selon la revendication 15, **caractérisé en ce que** le couvercle de fermeture (12, 10) est fixé à l'extrémité longitudinale avant (2) du tube en matière plastique (3) au moyen de tiges filetées (20) et d'écrous de serrage internes (21) et **en ce que**, lors du déroulement du procédé, des segments d'enveloppe de protection externe individuels (29) sont ensuite fixés aux tiges filetées (20) au moyen d'écrous de serrage externes (26) et **en ce que** les segments d'enveloppe de protection externe individuels (29) sont soudés afin d'obtenir l'enveloppe de protection externe (9).
